# EUROPÄISCHE PATENTSCHRIFT

(11) **EP 3 435 440 B1**
(45) Veröffentlichungstag und Bekanntmachung des Hinweises auf die Patenterteilung: **11.01.2023**
(21) Anmeldenummer: 18185202.1
(22) Anmeldetag: 24.07.2018
(51) Int. Cl.: H01M 10/42, B60L 50/64, H01M 50/242, H01M 50/209, H01M 50/503, H02J 7/00, H01M 50/224, H01M 50/249, H01M 50/278, H01M 50/284, H01M 50/289, H01M 50/512, H01M 50/519, H01M 10/613, H01M 50/296

(54) **SPEICHERMODUL ZUM BEREITSTELLEN ELEKTRISCHER ENERGIE UMFASSEND EINFASSMODUL, ANORDNUNG SOWIE TRANSPORTFAHRZEUG ENTHALTEND DAS SPEICHERMODUL**
STORAGE MODULE FOR PROVIDING ELECTRICAL ENERGY COMPRISING BORDERING MODULE, ARRANGEMENT AND TRANSPORT VEHICLE COMPRISING THE STORAGE MODULE
MODULE D'ACCUMULATION DE FOURNITURE DE L'ÉNERGIE ÉLECTRIQUE COMPRENANT UN MODULE BORDURE,
DISPOSITIF AINSI QUE VÉHICULE DE TRANSPORT COMPORTANT LE MODULE D'ACCUMULATION

(30) Priorität: 27.07.2017 DE 102017117067
(43) Veröffentlichungstag der Anmeldung: 30.01.2019
(73) Patentinhaber: Colibri Energy GmbH, 60320 Frankfurt (DE)
(72) Erfinder: MÜLLER, Lorenz, 10715 Berlin (DE); HEINE, Patrick, 10709 Berlin (DE)
(74) Vertreter: Metten, Karl-Heinz

(56) Entgegenhaltungen:
- EP-A1- 2 693 516
- EP-A1- 2 698 847
- EP-A1- 2 717 349
- WO-A1-2016/067487
- WO-A1-2016/158395

## Beschreibung

Die vorliegende Erfindung betrifft ein Speichermodul, eine Anordnung zum Bereitstellen elektrischer Energie und einen Trog, sowie Transportfahrzeuge enthaltend das Speichermodul, die Anordnung zum Bereitstellen elektrischer Energie oder den Trog sowie die Verwendung des Speichermoduls, der Anordnung zur Bereitstellung elektrischer Energie oder des Trogs für die Versorgung von Transportfahrzeugen mit elektrischer Energie oder als stationäre Energiequelle

Speichervorrichtungen zum Speichern elektrischer Energie gewinnen zunehmend an Bedeutung. Hierbei müssen die Speichervorrichtungen verschiedenste Anforderungen erfüllen. Im Bereich der Elektromobilität sind hohe Kapazitäten bei möglichst geringem Gewicht vonnöten. Gleichzeitig muss die abgegebene Leistung für den Betrieb der Elektromotoren ausreichen. Auch darf das Laden der Speichervorrichtung nicht zu viel Zeit in Anspruch nehmen. Traktionsbatterien für ungefederte Fahrzeuge wie Gabelstapler oder Vorfeldfahrzeuge auf Flughäfen müssen zudem extrem robust gegenüber Erschütterungen sein. Stationäre Speichervorrichtungen spielen eine wichtige Rolle bei der Speicherung der aus erneuerbaren Energiequellen erzeugten elektrischen Energie. Diese Speichervorrichtungen bedürfen einer besonderen Langlebigkeit. Zudem müssen sie dafür ausgelegt sein, mit unterschiedlichen und schwankenden Ladeströmen geladen zu werden.

Speichervorrichtungen zum Speichern elektrischer Energie müssen zudem unterschiedlichsten äußeren Einflüssen widerstehen. Temperaturen über 40 °C sind in einigen Regionen keine Seltenheit. Gleiches gilt für Temperaturen unter -40 °C. Letzteren sind auch regelmäßig Verkehrsflugzeuge in Reiseflughöhe ausgesetzt. Hohe oder ständig wechselnde Luftfeuchte oder Temperaturen können den Speichervorrichtungen dabei ebenso zusetzen wie etwa feiner Wüstenstaub in ariden Gebieten.

Verschiedenste Speichervorrichtungen finden heutzutage regelmäßige Anwendung in den verschiedensten Bereichen. In der Regel werden chemische Speichervorrichtungen eingesetzt. Diese auch als Sekundärelemente bezeichneten Speichervorrichtungen speichern die elektrische Energie in Form von chemischer Energie. Je nach den verwendeten Materialien werden unterschiedliche Arten von Sekundärelementen unterschieden. Blei-basierte Systeme finden heutzutage nach wie vor als Starterbatterien für Kraftfahrzeuge weitverbreitete Verwendung. Auch als Notstromversorgung oder Speicher für Photovoltaikanlagen werden diese Akkumulatoren aufgrund ihres geringen Preises eingesetzt. Aufgrund der relativ geringen Energiedichte sind Blei-Akkumulatoren in der Regel deutlich größer und schwerer als andere Systeme. Sie werden daher besonders im Bereich mobiler Endgeräte, aber auch im Bereich der Elektromobilität mehr und mehr durch Lithiumionen-basierte Systeme verdrängt. Letztere haben aufgrund ihrer hohen Energiedichte ein deutlich geringeres Gewicht. Li-Ionen-Akkumulatoren reagieren sensibel auf Überladung und Tiefentladung. Sie werden daher regelmäßig mit sogenannten Batteriemanagementsystemen (BMS) betrieben. In handelsüblichen Li-Ionen-Akkumulatoren ist die entsprechende Elektronik bereits integriert.

Li-Sekundärelemente sind im Allgemeinen teurer als Blei-basierte Systeme. Aufgrund der höheren Energiedichte, des höheren Wirkungsgrads und der in der Regel höheren Lebensdauer wird dieser Aufpreis aber oft in Kauf genommen.

Das Inverkehrbringen von NiCd-Akkumulatoren ist seit 2004 in der EU bis auf wenige Ausnahmen untersagt. Diese Technologie verliert dadurch zunehmend an Bedeutung.

Die Spannung einzelner Sekundärzellen wird in der Regel durch die zugrundeliegende Chemie vorgegeben. Die Spannung liegt je nach verwendetem Material in der Regel zwischen 2V und 4 V. Abweichende Spannungen können durch elektronische Verschaltungen erreicht werden. Bauform und Größe der Sekundärzellen sind maßgeblich für ihre Kapazität. Lithiuminonen-Sekundärzellen haben für gewöhnlich Nennspannungen im Bereich von 3V bis 4V.

Die Speichervorrichtungen sind regelmäßig als Batterien, also als baulicher Zusammenschluss einer Vielzahl an Sekundärzellen ausgelegt. Hierfür werden oftmals mehrere sogenannte Pouch-Zellen in einem Gehäuse zusammengefasst und verschaltet. Enthält eine Speichervorrichtung mehrere solcher Batterien in modularer Bauweise, werden die Batterien auch als Batteriemodule bezeichnet.

Pouch-Zellen sind dem Fachmann bekannt. Es handelt sich um taschenförmig ausgebildete Sekundärzellen. Diese weisen regelmäßig eine im wesentlichen quaderförmige Form mit einer Höhe, Breite und Tiefe auf, wobei die Breite regelmäßig größer ist als die Tiefe, welche regelmäßig größer ist als die Höhe der Pouch-Zelle. In der Regel sind an einer der beiden flächenmäßig kleinsten Seiten (Höhe x Tiefe) des Quaders die elektrischen Pole als laschenförmige Elektroden angeordnet, auch als erstes und zweites Kontaktelement bezeichnet. Diese Seite wird im Folgenden auch als Vorderseite oder Kontaktierungsseite der Pouch-Zelle bezeichnet. Die ihr gegenüberliegende Seite wird folglich als Rückseite bezeichnet. Die beiden flächenmäßig größten Seiten (Tiefe x Breite) werden als Oberseite und Unterseite bezeichnet.

Die Arbeitsspannung von Speichervorrichtungen liegt in der Regel deutlich höher als die Spannung, welche an den Sekundärzellen anliegt. Die Sekundärzellen einer Batterie bzw. eines Batteriemoduls werden daher regelmäßig in Reihe geschaltet, so dass die Spannung des Batteriemoduls der Summe der Einzelspannungen der Sekundärzellen entspricht.

Bei der Ladung und Entladung von Speicherzellen und damit auch von Batterien bzw. Batteriemodulen entsteht Wärme. Maßgeblich verantwortlich hierfür ist der elektrische Innenwiderstand der Speicherzellen und der Module. Die freigesetzte Wärme ist dabei insbesondere abhängig von der Lade- bzw. Entladeleistung. Bei Hochleistungsspeichervorrichtungen muss die entstehende Wärme abgeführt werden, um eine Überhitzung und damit verbundene Beschädigung zu vermeiden. Diese Ableitung der Wärme ist von zentraler Bedeutung in der Entwicklung von Hochleistungsspeichervorrichtungen.

Die US 2010/0163326 A1 beschreibt ein Batterietemperaturregulierungssystem. Die Batterie ist hierbei in einem Batteriegehäuse untergebracht. Dieses verfügt über mit Lüftern versehene Lufteinlässe und -auslässe sowie Ventile zur Steuerung eines Luftstroms, um die Batterie oder Teile der Batterie zu kühlen.

Zur Kühlung der einzelnen Module gibt es ebenfalls Ansätze. Die DE 10 2015 203 146 A1 lehrt, die Sekundärzellen auf einer Wärmeleitplatte mit mehrflutiger Kanalkonfiguration für ein strömendes Thermofluid anzuordnen.

Eine ähnliche Idee wird in der DE 10 2015 103 955 A1 verfolgt. Hier werden sog. Thermoplatten eingesetzt, welche Kanäle zum Umwälzen eines Fluidmediums umfassen können. Diese Thermoplatten bilden gleichzeitig Teile der Außenwände der Batteriemodule. Von den Thermoplatten ragen Kühlrippen in das Innere der Batteriemodule, so dass sie dort jeweils zwischen zwei benachbarten Sekundärzellen angeordnet vorliegen und die Wärme der Sekundärzellen zu den Thermoplatten ableiten können.

Auch die US 2013/0149575 befasst sich mit der Abführung von Wärme mittels Fluidkanälen.

Alternativ schlägt die DE 20 2014 102 895 U1 ein auf zwei Seiten offenen Batterietrog vor, um die Luftzirkulation zwischen den Batteriemodulen zu ermöglichen.

Nachteilig an diesen Lösungen ist, dass sie einer aktiven Kühlung bedürfen. Dadurch erhöht sich der Wartungsaufwand, z.B. durch die regelmäßige Überprüfung und den Austausch der Kühlmittel. Die aktive Kühlung umfasst zudem bewegliche Teile, welche verschleißen und ebenfalls regelmäßig gewartet werden müssen. Zudem müssen die Kühlvorrichtungen bei ungefederten Fahrzeugen wie Gabelstaplern erheblichen Erschütterungen standhalten. Offene Kühlsysteme mit Luft als Kühlmedium sind hingegen ständig den äußeren Umweltbedingungen ausgesetzt. In ariden Gebieten kann z.B. feiner Wüstenstaub Luftfilter verstopfen und der Elektronik zusetzen und so die Einsatzbereitschaft der Batterie mindern und den Wartungsaufwand deutlich erhöhen.

Die WO 2016/067487 A1 stellt ab auf eine Stromversorgungsvorrichtung umfassend eine Mehrzahl von Batteriezellen und ein Gehäuse mit einem Paar von Gehäusekörpern, die neben der Aufstellfläche angeordnet sind. Zwischen dem Paar von Gehäusekörpern wird durch Verbinden des Paares von Gehäusekörpern miteinander ein Speicherraum zur Aufnahme einer Vielzahl von Batteriezellen gebildet. Jeder der Gehäusekörper enthält einen Befestigungsabschnitt zur Befestigung des Gehäusekörpers an der Aufstellfläche. Eine derartige Stromversorgungsvorrichtung soll es möglich machen, die Widerstandsfähigkeit der Stromversorgungsvorrichtung gegen Vibration zu verbessern.

Die EP 2 698 847 A1 betrifft ein Batteriepack, umfassend eine Vielzahl von Batteriemodulen, die jeweils mindestens eine Einheitszelle aufweisen, ein Gehäuse zum Aufnehmen der Einheitszelle und eine mit der Einheitszelle elektrisch verbundene Sammelschiene sowie eine Verbindungsschiene zum Verbinden aneinander angrenzender Batteriemodule aus der Vielzahl von Batteriemodulen. Mindestens eine der Verbindungsschienen beinhaltet ferner eine erste Metallplatte, eine zweite Metallplatte, die von der ersten Metallplatte beabstandet ist, und eine Metallbrücke, die konfiguriert ist, um die erste Metallplatte und die zweite Metallplatte zu verbinden und einen niedrigeren Schmelzpunkt als die Metallplatte hat. Derartigen Batteriepacks sollen eine bessere Sicherheit gewährleisten, indem ein Verbindungsstab, der die Batteriemodule elektrisch verbindet, leicht unterbrochen werden kann.

Die EP 2 693 516 A1 betrifft ebenfalls einen Batteriepack, umfassend eine Vielzahl von Batterieeinheiten, die eine herausgezogene Positiv-Elektroden- und Negativ-Elektroden-Lasche aufweisen, sowie eine Platine, auf der herausgezogene Laschenverbindungsabschnitte ausgebildet sind, um die herausgezogenen Laschen unterschiedlicher Polaritäten benachbarter Batterieeinheiten zu verbinden. Derartigen Batteriepacks sollen hocheffizient gefertigt werden können und so zur Produktivität beitragen.

Die EP 2 717 349 A1 stellt ab auf eine Sekundärbatterievorrichtung umfassend eine Mehrzahl von Sekundärbatteriezellen und ein Harzgehäuse, das eine Vielzahl von Wandabschnitten umfasst, die eine Vielzahl von Aufnahmeabschnitten definieren, die so konfiguriert sind, dass sie die Sekundärbatteriezellen einzeln aufnehmen können. Mindestens einer der Wandabschnitte, die jeden der Aufnahmeabschnitte definieren, umfasst eine Vielzahl von Druckfedern, die einstückig mit der Trennwand aus einem Harz geformt und so konfiguriert sind, dass sie jede der in den Aufnahmeabschnitten untergebrachten Sekundärbatteriezellen drücken und positionieren. Derartige Sekundärbatterievorrichtungen sollen eine bessere Montagefähigkeit und Zuverlässigkeit aufweisen.

Die WO 2016/158395 A1 betrifft eine Sekundärbatterievorrichtung, umfassend eine Vielzahl von Sekundärbatteriezellen und ein Gehäuse mit einem Bodenabschnitt, in dem eine Vielzahl von Sekundärbatteriezellen angeordnet ist, einem Trennelement, das zwischen die Sekundärbatteriezellen eingefügt ist und einen ersten Kontaktabschnitt aufweist, einem Trennelement und einem Andruckelement mit einem zweiten Anschlagabschnitt, der an den ersten Anschlagabschnitt des Trennelements anstößt. Hierbei bilden der erste Anschlagabschnitt des Trennelements und der zweite Anschlagabschnitt des Andruckelements einen Spreizmechanismus, der eine der Sekundärbatteriezellen auf beiden Seiten des Trennelements in einer Richtung der Anordnungsrichtung drückt und die andere in die entgegengesetzte Richtung drückt. Bei einer derartigen Sekundärbatterievorrichtung sollen eine Sekundärzelle und ein Trennwandelement leicht in ein Gehäuse eingebaut werden können und reduzierte Kosten generieren helfen.

Herkömmliche Batteriesysteme für PKW sind für den Einsatz in ungefederten Fahrzeugen nur bedingt geeignet. Durch die fehlende Federung sind die Batterien deutlich stärkeren Stößen und Erschütterungen ausgesetzt. Dieser Umstand erfordert Maßnahmen, um die Speichervorrichtung als ganze, aber auch ihre einzelnen Komponenten, gegen die hohen Beschleunigungen zu sichern. Schwachpunkte bilden häufig die laschenförmigen Elektroden der Pouch-Zellen. Diese sind in der Regel aus einem dünnen Blech gefertigt, und können bei zu starken Erschütterungen der Zellen abreißen. Ein simpler Ansatz wäre, die Zellen so dicht und fest einzufassen, dass eine Bewegung bei Erschütterung unmöglich ist. Jedoch muss beachtet werden, dass die Pouch-Zellen sich beim Auf- und Entladen ausdehnen können. Um die Entstehung hoher Drücke oder gar Explosionen zu vermeiden, muss den Zellen daher genügend Raum zum Ausdehnen gelassen werden. Zudem würde eine dichte Anordnung der Zellen das Abführen der Wärme erschweren.

Ziel der Entwicklung von Speichervorrichtungen zum Speichern elektrischer Energie ist folglich, die Nachteile des Stands der Technik zu überwinden und einen leistungsstarken, langlebigen und wartungsarmen Energiespeicher zu entwickeln, der zudem vorzugsweise robust gegenüber äußeren mechanischen Einflüssen, insbesondere Stößen und Vibrationen und gegenüber äußeren Umwelteinflüssen wie Temperatur, Luftfeuchte und Staub ist.

Gelöst wird die der Erfindung zugrunde liegende Aufgabe durch ein Speichermodul, umfassend eine stapelförmige Anordnung einer Vielzahl an elektrischen Speicherzellen, insbesondere von mindestens 5, bevorzugt mindestens 10 und besonders bevorzugt mindestens 15 elektrischen Speicherzellen, mit einer Kontaktierungsseite und einer der Kontaktierungsseite gegenüberliegenden Rückseite sowie einer sich zwischen Kontaktierungs- und Rückseite erstreckenden Oberseite und einer der Oberseite gegenüberliegenden, sich zwischen Kontaktierungs- und Rückseite erstreckenden Unterseite, eine Vielzahl an Trägerplatten mit einem zu der Kontaktierungsseite korrespondierenden vorderseitigen Rand und einem gegenüberliegenden rückseitigen Rand und eine Platinenplatte sowie gegebenenfalls eine Rückseitenplatte, wobei die Kontaktierungsseiten der Speicherzellen auf derselben Seite der Anordnung vorliegen, wobei die Trägerplatten der Vielzahl an Trägerplatten jeweils zwischen benachbarten Speicherzellen vorliegen, wobei die Speicherzellen jeweils über ein erstes und ein zweites Kontaktelement auf der Kontaktierungsseite, einen positiven bzw. einen negativen elektrischen Pol der Speicherzelle darstellend, insbesondere in Form einer elektrisch leitfähigen Metalllasche, verfügen und wobei die Platinenplatte erste Durchtrittsöffnungen, insbesondere in Schlitzform, für die ersten und zweiten Kontaktelemente aufweist,

ein Einfassmodul, umfassend oder bestehend aus einem ersten Einfasselement und einem räumlich hiervon getrennten, insbesondere identischen, zweiten Einfasselement,
jeweils eingerichtet und ausgelegt zum Einfassen und elektrischen Kontaktieren einer, insbesondere im Wesentlichen quaderförmigen, stapelförmigen Anordnung der Vielzahl an elektrischen Speicherzellen, umfassend mindestens einen ersten im Wesentlichen flächigen Teilbereich, eingerichtet und ausgelegt zur Anlage an einer ersten Seitenfläche der Anordnung der elektrischen Speicherzellen, mindestens einen zweiten im Wesentlichen flächigen Teilbereich, eingerichtet und ausgelegt zur Anlage an einer zweiten Seitenfläche der Anordnung der elektrischen Speicherzellen, und mindestens einen dritten im Wesentlichen flächigen Teilbereich, eingerichtet und ausgelegt, um beabstandet von der Anordnung der elektrischen Speicherzellen anbringbar zu sein, wenn der erste Teilbereich und der zweite Teilbereich sich in Anlage mit der ersten bzw. zweiten Seitenfläche der Anordnung von elektrischen Speicherzellen befinden, sowie gegebenenfalls mindestens einen vierten im Wesentlichen flächigen Teilbereich, eingerichtet und ausgelegt, um gegenüberliegend von dem dritten Teilbereich beabstandet von der Anordnung der elektrischen Speicherzellen anbringbar zu sein, wobei der erste, zweite, dritte und gegebenenfalls vierte Teilbereich miteinander verbunden, insbesondere einstückig ausgeführt, sind,
wobei der zweite Teilbereich des ersten Einfasselements und der zweite Teilbereich des zweiten Einfasselements an der Platinenplatte anliegen, wobei der erste Teilbereich des ersten Einfasselements an der sich zwischen der Kontaktierungsseite und der Rückseite erstreckenden ersten Seitenfläche der stapelförmigen Anordnung der Vielzahl an elektrischen Speicherzellen anliegt, wobei der erste Teilbereich des zweiten Einfasselements an der sich zwischen der Kontaktierungsseite und der Rückseite erstreckenden, der ersten Seitenfläche gegenüberliegenden zweiten Seitenfläche der stapelförmigen Anordnung der Vielzahl an elektrischen Speicherzellen anliegt und wobei die beiden Einfasselemente elektrisch isoliert voneinander, insbesondere voneinander beabstandet, vorliegen,
wobei der dritte Teilbereich des ersten Einfasselements und der dritte Teilbereich des zweiten Einfasselements beabstandet von und insbesondere im Wesentlichen parallel zu der Oberseite der stapelförmigen Anordnung der Vielzahl an elektrischen Speicherzellen vorliegen und/oder dass der vierte Teilbereich des ersten Einfasselements und der vierte Teilbereich des zweiten Einfasselements beabstandet von und insbesondere im Wesentlichen parallel zu der Unterseite der stapelförmigen Anordnung der Vielzahl an elektrischen Speicherzellen vorliegen.

Für eine ausreichende Kapazität der Speicheranordnung ist eine Vielzahl an elektrischen Speicherzellen nötig. Diese werden im Allgemeinen so angeordnet, dass Ober- und Unterseite aneinander anliegen und mehrere Zellen so eine stapelförmige Anordnung von elektrischen Speicherzellen bilden. Die stapelförmige Anordnung weist analog den einzelnen elektrischen Speicherzellen eine Kontaktierungsseite oder Vorderseite, eine ihr gegenüberliegende Rückseite und sich zwischen Kontaktierungsseite und Rückseite erstreckende Ober- und Unterseiten auf. Viele Elektrofahrzeuge wie Gabelstapler oder Gepäck-Carrier sind darauf ausgelegt Traktionsbatterien aufzunehmen, deren Batteriepole an der Oberseite der Batterie angeordnet sind. Entsprechend werden die Speicherzelle regelmäßig auf ihrer Rückseite stehend, d.h. mit ihren häufig laschenförmig ausgebildeten Elektroden nach oben ausgerichtet, angeordnet. Es hat sich überraschenderweise gezeigt, dass eine Anordnung elektronischer Speicherzellen erheblich resistenter gegenüber mechanischen Stößen ist, wenn die Zellen auf ihrer Ober- oder Unterseite aufeinanderliegend angeordnet sind. In dieser Anordnung wirkt die Kraft, welche durch die Erschütterung z.B. beim Überfahren einer Fuge oder Schwelle auftritt, nicht entlang der laschenförmig ausgelegten Elektroden, sondern senkrecht zu diesen. Das Risiko des Abreißens der Laschen wird vermindert. In dieser Anordnung zeigen die laschenförmigen Elektroden waagerecht von der Anordnung weg. Für die Verwendung als Batterie oder Batteriemodul ist es vorteilhaft, die elektrischen Anschlüsse der Speicheranordnung an der Oberseite anzuordnen. Eine naheliegende Lösung wäre es, den Strom über Drähte oder Kabel von der Vorderseite der liegenden elektrischen Speicherzellen an die gewünschte Stelle zu führen. Dies ist die einfachste und vom Materialaufwand günstigste Lösung. Es hat sich aber gezeigt, dass diese Verschaltung zu hohen elektrischen Widerstände führt und eine große Menge Wärme entsteht. Es hat sich überaschenderweise gezeigt, dass diese Nachteile durch das beschriebene Einfasselement überwunden werden können. Das Einfasselement kann so angeordnet sein, dass der zweite flächige Teilbereich mit zumindest einem Teil der Elektroden der Anordnung von Speicherzellen in elektrisch leitendem Kontakt steht. Der Strom kann in einer solchen Anordnung über das Einfasselement an die Oberseite der Anordnung geleitet werden. Durch die flächige Ausgestaltung der Teilbereiche können sowohl der elektrische Strom als auch Wärme gut abgeleitet werden. Des Weiteren stabilisiert das Einfasselement die Anordnung von Speicherzellen und hält sie zusammen.

Eine solche Ausführungsform hat sich als vorteilhaft erwiesen, bei der der mindestens eine erste, zweite und dritte Teilbereich und gegebenenfalls der mindestens eine vierte Teilbereich gemeinsam mindestens einen Teil mindestens dreier bzw. vierer benachbarter Seiten der Oberfläche eines Hohlquaders bilden. Eine solche Ausgestaltung ermöglicht das Einfassen der Anordnung von Speicherzellen von vier Seiten und erhöht die Stabilität.

Als besonders effektiv hat sich dabei eine solche Ausführungsform erwiesen, bei der das erste und das zweite Einfasselement oder der erste, der zweite und der dritte Teilbereich sowie gegebenenfalls der vierte Teilbereich des ersten und des zweiten Einfasselements aus einem stromleitfähigen Material, welches eine elektrische Leitfähigkeit von mehr als 1×10⁶ S/m, bevorzugt mehr als 20×10⁶ S/m, besonders bevorzugt mehr als 35×10⁶ S/m, insbesondere mehr als 50×10⁶ S/m, jeweils bei einer Temperatur von 300K aufweist, besteht oder ein solches Material umfasst, und/oder dass dieses, insbesondere der erste, der zweite und der dritte Teilbereich sowie gegebenenfalls der vierte Teilbereich, aus einem Material besteht oder dieses umfasst, welches eine Wärmeleitfähigkeit von mehr als 50 W/(m K), bevorzugt mehr als 100 W/(m K), besonders bevorzugt von mehr als 200 W/(m K), jeweils bei einer Temperatur von 0°C, aufweist. Eine hohe elektrische Leitfähigkeit vermindert die durch den elektrischen Widerstand entstehende Wärme. Eine hohe Wärmeleitfähigkeit sorgt für einen schnellen Abtransport und eine schnelle Verteilung der Wärme, insbesondere der Wärme, die an den Kontaktstellen zwischen den Elektroden der Speicherzellen und dem Einfasselement entsteht.

Es hat sich gezeigt, dass besonders gute elektrische Leitfähigkeit und Wärmeleitfähigkeit mit einer solchen Ausführungsform erreicht werden kann, bei der insbesondere der mindestens eine erste Teilbereich, der mindestens eine zweite Teilbereich oder der mindestens eine dritte Teilbereich sowie gegebenenfalls der mindestens eine vierte Teilbereich, Kupfer umfasst oder aus Kupfer besteht oder bei der bevorzugt der mindestens eine erste Teilbereich, der mindestens eine zweite Teilbereich und der mindestens eine dritte Teilbereich sowie gegebenenfalls der mindestens eine vierte Teilbereich Kupfer umfassen oder aus Kupfer bestehen.

Es kann vorgesehen sein, dass der zweite Teilbereich und der dritte Teilbereich sowie gegebenenfalls der vierte Teilbereich sich von dem ersten Teilbereich erstrecken, insbesondere einstückig mit diesem verbunden sind, wobei der zweite Teilbereich und der dritte Teilbereich sowie gegebenenfalls der zweite Teilbereich und der vierte Teilbereich und gegebenenfalls der dritte Teilbereich und der vierte Teilbereich nicht unmittelbar miteinander verbunden sind.

Für das Einfassen einer stapelförmigen, im Wesentlichen quaderförmigen Anordnung von Speicherzellen ist eine solche Ausführungsform von Vorteil, bei der der zweite und der dritte Teilbereich sowie gegebenenfalls der vierte Teilbereich sich, insbesondere senkrecht zur Fläche des ersten Teilbereichs, von dem ersten Teilbereich im Wesentlichen gleichgerichtet weg erstrecken.

Die so entstehende Form eines Teils eines Hohlquaders kann eine stapelförmige Anordnung von Speicherzellen von mehreren Seiten zumindest teilweise einfassen.

In einer zweckmäßigen Ausführungsform verfügen der erste, zweite und dritte Teilbereich sowie gegebenenfalls der vierte Teilbereich über eine im Wesentlichen rechteckige Grundfläche. Von besonderem Vorteil ist auch eine solche Ausführungsform, bei der der zweite Teilbereich über eine Vielzahl an voneinander, insbesondere regelmäßig, beabstandeten ersten Löchern, ausgelegt für den Durchtritt von Lötmaterial verfügt, wobei vorzugsweise Gruppen, insbesondere Paare oder Tripel, an ersten Löchern beabstandet von benachbarten Gruppen, insbesondere Paaren oder Tripeln, an ersten Löchern vorliegen, und/oder das der dritte Teilbereich über zweite Löcher, insbesondere drei zweite Löcher, eingerichtet und ausgelegt zur mechanischen und/oder elektrischen Verbindung des dritten Teilbereichs mit Polkontakten vorliegen. Ferner kann vorgesehen sein, dass gegenüberliegend von dem zweiten Teilbereich kein weiterer Teilbereich sich von dem ersten Teilbereich weg von der Fläche desselben erstreckt.

Das Einfasselement zeichnet sich vorzugsweise durch eine hohe elektrische Leitfähigkeit und/oder eine hohe Wärmeleitfähigkeit aus. Hierdurch sinkt der Bedarf an aktiver Kühlung. Die Wärme kann sich schnell über das gesamte Einfasselement verteilen, lokale Hotspots können vermieden werden. Das Einfasselement wie auch insbesondere das Einfassmodul können zudem der Stabilisierung einer stapelförmigen Anordnung von elektrischen Speicherzellen dienen und diese auch vor mechanischen Einflüssen schützen.

Mit dem erfindungsgemäßen Speichermodul kann ein wirksames Batteriesystem zum Bereitstellen elektrischer Energie umfassend eine Vielzahl an elektrischen Speicherzellen zur Verfügung gestellt werden. Hierin sind diese Speicherzellen gruppenweise in sogenannten Speichermodulen zusammengefasst. Diese Speichermodule können z.B. im Störfall leicht und unkompliziert ausgetauscht werden, was die Wartungsfreundlichkeit deutlich erhöht. Das erfindungsgemäße Speichermodul ist sehr robust gegenüber mechanischen Einwirkungen und schützt die elektrischen Speicherzellen, lässt dabei den elektrischen Speicherzellen aber gleichzeitig genug Raum für die mögliche Ausdehnung beim Auf- und Entladen.

In dieser Ausführung bilden Platinenplatte, Rückseitenplatte und Trägerplatten jeweils einen Rahmen um einzelne Speicherzellen oder zwei oder mehr der Speicherzellen. Es kann vorgesehen sein, zwischen allen jeweils benachbarten Speicherzellen eine Trägerplatte anzuordnen. Es hat sich gezeigt, dass sich eine stabile Anordnung erreicht werden kann, wenn auf höchstens jede zehnte, insbesondere höchstens jede fünfte Speicherzelle eine Trägerplatte folgt.

Die Trägerplatten können mit der Platinenplatte und der Rückseitenplatte verbunden sein, insbesondere durch Einrast- bzw. Steckelemete, Verkleben oder Verschrauben. Platinenplatte, Rückseitenplatte und Trägerplatten können auch einstückig ausgeführt sein.

Es hat sich überraschenderweise gezeigt, dass eine sehr gute Stabilität auch dadurch erreicht wird, dass die Platinenplatte über zweite Durchtrittsöffnungen oder Einbuchtungen verfügt, insbesondere entlang des im Wesentlichen zentralen longitudinalen Abschnitts der Platinenplatte angeordnet, und die Trägerplatten an dem vorderseitigen Rand mit mindestens einem ersten Vorsprung ausgestattet sind, eingerichtet und ausgelegt, um in die jeweils korrespondierenden zweiten Durchtrittsöffnungen oder Einbuchtungen der Platinenplatte, insbesondere rastend, einzugreifen. Die dadurch mögliche Steckverbindung hat sich in der Praxis erstaunlicherweise als ausreichend stabil und robust herausgestellt.

In einer Weiterentwicklung dieser Ausführung kann vorgesehen sein, dass die Rückseitenplatte über dritte Durchtrittsöffnungen oder Einbuchtungen verfügt, insbesondere entlang des im Wesentlichen zentralen longitudinalen Abschnitts der Rückseitenplatte angeordnet, und dass die Trägerplatten an dem rückseitigen Rand mit mindestens einem zweiten Vorsprung ausgestattet sind, eingerichtet und ausgelegt, um in die jeweils korrespondierenden dritten Durchtrittsöffnungen der Rückseitenplatte, insbesondere rastend, einzugreifen.

Zusätzlich kann vorgesehen sein, dass die stapelförmige Anordnung der Vielzahl an elektrischen Speicherzellen auf ihrer Oberseite eine Trägerplatte aus der Vielzahl an Trägerplatten und/oder auf ihrer Unterseite eine Trägerplatte aus der Vielzahl an Trägerplatten aufweist, vorzugsweise jeweils ausgestattet mit mindestens einem ersten Vorsprung an dem vorderseitigen Rand und gegebenenfalls mindestens einem zweiten Vorsprung an dem rückseitigen Rand.

Es hat sich zudem als vorteilhaft erwiesen, wenn der mindestens eine erste Vorsprung an dem vorderseitigen Rand der oberseitigen Trägerplatte in eine zweite Durchtrittsöffnung oder Einbuchtung oder vorzugsweise in eine randseitige Einlassung der Platinenplatte, insbesondere rastend, eingreift und der mindestens eine zweite Vorsprung an dem rückseitigen Rand der oberseitigen Trägerplatte in eine dritte Durchtrittsöffnung oder Einbuchtung oder vorzugsweise in eine randseitige Einlassung der Platinenplatte, insbesondere rastend, eingreift und/oder wenn der mindestens eine erste Vorsprung an dem vorderseitigen Rand der unterseitigen Trägerplatte in eine zweite Durchtrittsöffnung oder Einbuchtung oder vorzugsweise in eine randseitige Einlassung der Platinenplatte, insbesondere rastend, eingreift und der mindestens eine zweite Vorsprung an dem rückseitigen Rand der unterseitigen Trägerplatte in eine dritte Durchtrittsöffnung oder Einbuchtung oder vorzugsweise in eine randseitige Einlassung der Platinenplatte, insbesondere rastend, eingreift. In dieser Ausführung ist die stapelförmige Anordnung der Vielzahl an elektrischen Speicherzellen vollständig von einem Rahmen aus Platinenplatte, Rückseitenplatte und den ober- und unterseitigen Trägerplatten eingerahmt.

Es kann in einer Ausführungsform vorgesehen sein, dass die Platinenplatte eine Basisplatte aus Kunststoff und auf der von den Speicherzellen abgewandten Seite eine erste Metalllage und räumlich und/oder elektrisch getrennt hiervon eine zweite Metalllage umfasst, wobei die ersten Metalllage im Bereich der ersten Durchtrittsöffnungen für das erste Kontaktelement und die zweite Metalllage im Bereich der ersten Durchtrittsöffnungen für das zweite Kontaktelement vorliegen und wobei die erste und die zweite Metalllage im Bereich der Überlappung mit den ersten Durchtrittsöffnungen korrespondierende Öffnungen aufweisen.

In einer Variante der Erfindung liegen die zweiten Durchtrittsöffnungen zwischen der ersten und der zweiten Metalllage vor.

Zur weiteren Stabilisierung kann es vorgesehen sein, dass die stapelförmige Anordnung einer Vielzahl an elektrischen Speicherzellen mit mindestens einer Folie, insbesondere Klebefolie, bereichsweise oder im Wesentlichen vollständig ummantelt ist.

Von Vorteil ist hierbei auch, dass sich die Speicherzellen trotz der Umrahmung durch Platinenplatte, Rückseitenplatte und Trägerplatte und trotz der Ummantelung mit der mindestens einen Folie noch ausdehnen können, ohne dass gefährliche Drücke oder mechanische Spannungen entstehen.

Das erfindungsgemäße Speichermodul umfassend das vorangehend beschriebene Einfassmodul ermöglicht ein optimiertes Wärmemanagement.

In einer weiterführenden Ausgestaltung sind die ersten Kontaktelemente, insbesondere die ersten Metalllaschen, mindestens bereichsweise mit der ersten Metalllage und gegebenenfalls dem zweiten Teilbereich des ersten Einfasselements verlötet und/oder sind die zweiten Kontaktelemente, insbesondere die zweiten Metalllaschen, mindestens bereichsweise mit der zweiten Metalllage und gegebenenfalls dem zweiten Teilbereich des zweiten Einfasselements verlötet.

Für einen möglichst geringen elektrischen Widerstand ist es ferner nützlich, wenn der zweite Teilbereich des ersten Einfasselements mit der ersten Metalllage der Platinenplatte und der zweite Teilbereich des zweiten Einfasselements mit der zweiten Metalllage der Platinplatte verlötet sind.

Auf diese Weise sind die elektrischen Speicherzellen parallel geschaltet. Die ersten und zweiten Kontaktelemente sind durch das Verlöten jeweils untereinander über die jeweilige Metalllage und das jeweilige Einfasselement elektrisch verbunden. Regelmäßig werden in Anordnungen elektrischer Speicherzellen diese in Reihe geschaltet, um eine hohe Spannung zu erhalten. Es hat sich aber gezeigt, dass durch den hohen Innenwiderstand einer solchen Reihenschaltung große Wärmemengen auf kleinem Raum freigesetzt werden. Um einer Gefährdung durch zu hohe Temperaturen entgegenzuwirken, muss daher regelmäßig auf aktive Kühlelemente zurückgegriffen werden. Es hat sich überaschenderweise gezeigt, dass die in der vorliegenden Erfindung verwendbare Parallelschaltung ebenfalls dazu beitragen kann, die Wärmeentwicklung deutlich zu reduzieren. Mit der vorliegenden Erfindung gelingt es, dass auf aktive Kühlelemente zur Kühlung der Speicherzellen verzichtet werden kann. Zudem wirken die Einfasselemente des gemäßen Einfassmoduls als Wärmedissipator. Sie leiten die Wärme von den wärmsten Stellen, in der Regel den flächigen Lötstellen zwischen den Kontaktelementen, den Metalllagen und den zweiten Teilbereichen der Einfasselemente, weg und verteilen sie.

Weiterhin kann vorgesehen sein, dass die ersten Durchtrittsöffnungen im Bereich der ersten Metalllage sich nicht oder nicht vollständig in Deckung befinden mit den ersten Löchern des zweiten Teilbereichs des ersten Einfasselements und dass die ersten Durchtrittsöffnungen im Bereich der zweiten Metalllage sich nicht oder nicht vollständig in Deckung befinden mit den ersten Löchern des zweiten Teilbereichs des zweiten Einfasselements.

Für das Anschließen des Speichermoduls ist es darüber hinaus zweckmäßig, wenn dieses Speichermodul ferner mindestens einen Moduldeckel ausgestattet mit einer Vielzahl an elektrischen Polen, insbesondere einer geraden Anzahl an elektrischen Polen, bevorzugt mindestens 2 Polen, besonders bevorzugt mindestens 4 Pole und ganz besonders bevorzugt mindestens 6 Polen, welche ausgelegt und eingerichtet sind, eine elektrisch leitende Verbindung mit den Speicherzellen herzustellen, enthält.

In einer Weiterentwicklung ist eine erste Gruppe, insbesondere die erste Hälfte, der Vielzahl an elektrischen Polen mit dem dritten Teilbereich des ersten Einfasselements, insbesondere vermittels der darin vorliegenden zweiten Löcher, mechanisch und elektrisch leitend verbunden oder verbindbar und eine zweite Gruppe, insbesondere die zweite Hälfte, der Vielzahl an elektrischen Polen mit den dritten Teilbereich des zweiten Einfasselements, insbesondere vermittels der darin vorliegenden zweiten Löcher, mechanisch und elektrisch leitend verbunden oder verbindbar.

Für den Schutz des erfindungsgemäßen Speichermoduls hat sich außerdem eine solche Ausführungsform bewährt, bei der dieses Modul ferner einen Modulnapf mit Napfseitenwänden und einem Napfboden umfasst, wobei der Moduldeckel, insbesondere mittels Verklebens, mit dem Modulnapf, insbesondere flüssigkeits- und/oder staubdicht, verbunden oder verbindbar ist.

Es kann in einer Ausführungsform vorgesehen sein, dass der Modulnapf und Moduldeckel aus mindestens einem Kunststoffmaterial, insbesondere Polyethylen oder Polypropylen oder einem Ethylen-Copolymeren oder einem Propylen-Copolymeren, bestehen oder dieses umfassen, wobei der Moduldeckel aus einem härteren Kunststoffmaterial gebildet ist, insbesondere besteht, als der Modulnapf.

Für die Steuerung und Überwachung des erfindungsgemäßen Speichermoduls kann in einer weiteren Ausführungsform vorgesehen sein, dass das Modul mindestens eine Kommunikationsschnittstelle umfasst, welche ausgelegt und eingerichtet ist, Informationen über einen Ladezustand, einen Ladevorgang, einen Entladevorgang, eine Temperatur, eine Spannung und/oder eine Stromstärke mindestens einer Speicherzelle, insbesondere einer Anordnung einer Vielzahl an elektrischen Speicherzellen, zu sammeln und/oder weiterzuleiten.

Zur Verbesserung der Stoßfestigkeit kann zudem vorgesehen sein, dass zwischen der Unterseite der stapelförmigen Anordnung der Vielzahl an elektrischen Speicherzellen und dem Napfboden mindestens eine erste stoßdämpfende Lage oder zwischen der Unterseite der stapelförmigen Anordnung der Vielzahl an elektrischen Speicherzellen und den vierten Teilbereichen von erstem und zweitem Einfasselement mindestens eine zweite stoßdämpfende Lage und/oder zwischen den vierten Teilbereichen von erstem und zweitem Einfasselement und Napfboden mindestens eine dritte stoßdämpfende Lage vorliegt.

Als praktisch hat es sich erwiesen, wenn die Speicherzellen im Wesentlichen parallel entlang der Richtung ihrer Tiefe angeordnet sind, insbesondere aneinander anliegen, insbesondere unter Ausbildung einer im Wesentlichen quaderförmigen Zellenanordnung.

Es kann demgemäß weiterhin ein erfindungsgemäßes Speichermodul vorgesehen sein, bei dem die Kontaktelemente, insbesondere die Metalllaschen auf der Platinenplatte umgekämmt vorliegen, vorzugsweise in einer Weise, dass sie zumindest teilweise im Wesentlichen parallel zur Oberfläche der Platinenplatte angeordnet sind. Eine solche Anordnung vereinfacht das Verbinden, insbesondere Verlöten, von den Kontaktelementen mit den Metalllagen. Zudem wird auf diese Weise ein flächiger Kontakt zwischen Kontaktelement und Metalllage hergestellt, welcher einen deutlich niedrigeren elektrischen Widerstand aufweist als ein punktueller Kontakt.

Als zweckdienlich hat sich zudem erwiesen, wenn die Einfasselemente gemeinsam jeweils mit ihren zweiten Teilbereichen diejenige Seite der stapelförmigen, insbesondere quaderförmigen, Anordnung der Vielzahl an elektrischen Speicherzellen, an welcher die Platinenplatte mit den elektrischen Polen der Speicherzellen angeordnet ist, zumindest teilweise abdecken, und die Einfasselemente jeweils mit ihrem ersten Teilbereich die jeweilig benachbart zu dieser Seite vorliegende Seitenfläche der stapelförmigen Anordnung der Vielzahl an elektrischen Speicherzellen zumindest teilweise abdecken, wobei die beiden Einfasselemente elektrisch isoliert voneinander, insbesondere voneinander beabstandet vorliegen.

Gemäß einer Ausführungsform sind sämtliche erste Kontaktelemente der Speicherzellen der stapelförmigen Anordnung der Vielzahl an elektrischen Speicherzellen jeweils mit dem zweiten Teilbereich des ersten Einfasselements und sämtliche zweite Kontaktelemente der Speicherzellen der stapelförmigen Anordnung der Vielzahl an elektrischen Speicherzellen jeweils mit dem zweiten Teilbereich des zweiten Einfasselements in der Weise elektrisch leitend verbunden, so dass die Speicherzellen in einer Parallelschaltung vorliegen.

In einer weiterführenden Ausgestaltung des erfindungsgemäßen Speichermoduls sind zudem die eine erste Gruppe, insbesondere die erste Hälfte, der elektrischen Pole des Moduldeckels mit dem zweiten Teilbereich des ersten Einfasselements und die eine zweite Gruppe, insbesondere die zweite Hälfte, der elektrischen Pole des Moduldeckels mit dem zweiten Teilbereich des zweiten Einfasselements elektrisch leitend verbunden.

Es kann auch vorgesehen sein, die stapelförmige Anordnung von elektrischen Speicherzellen zusammen mit den sie einfassenden Einfasselementen mit einer Folie, insbesondere einer Klebefolie, vollständig oder zumindest teilweise zu ummanteln. Die Stabilität der stapelförmigen Anordnung wird erhöht.

Ein besonders guter Schutz vor mechanischen und umweltbedingten Belastungen des Speichermoduls kann erreicht werden, wenn die stapelförmige Anordnung der Vielzahl an elektrischen Speicherzellen in dem Modulnapf in einer Weise angeordnet ist, dass diese in einem aus Modulnapf und Moduldeckel gebildeten Behälter eingeschlossen vorliegt.

Die vorhergehend beschriebenen Ausführungsformen des Speichermoduls tragen maßgeblich zum Erlangen einer robusten, wartungsfreundlichen und sicheren Stromspeichervorrichtung bei. Regelmäßig wird darauf geachtet, möglichst wenig Material zu verwenden, um Produktionskosten gering zu halten. Überraschenderweise hat sich herausgestellt, dass ein materieller Mehraufwand dennoch lohnt. Die Verwendung massiver wärme- und stromleitender Einfasselemente, flächiger Lötstellen und einer Mehrzahl massiver Modulpole sorgen jeweils für einen guten Wärmetransport und eine gute Wärmeverteilung. Durch die parallele Schaltung der elektrischen Speicherzellen verringert sich der Innenwiderstand des Moduls, wodurch weniger Wärme freigesetzt wird. Auf eine aktive Kühlung des Moduls oder der elektrischen Speicherzellen kann verzichtet werden. Dadurch können Produktionskosten eingespart werden. Zudem sind aktive Kühlvorrichtungen, gerade aufgrund ihrer beweglichen Komponenten, selber Fehlerquellen, welche die Lebensdauer des Systems oder den Wartungsaufwand negativ beeinflussen können. Der Verzicht auf aktive Kühlelemente ermöglicht zudem eine staub- und feuchtigkeitsdichte Versiegelung des Moduls. Das Innere des Moduls ist so vor äußeren Umweltbedingungen geschützt.

Überraschenderweise ist das beschriebene erfindungsgemäße Speichermodul äußerst robust gegenüber starken Erschütterungen und mechanischen Einflüssen. Das Risiko des Abreißens der Kontaktelemente von den elektrischen Speicherzellen, ein Schwachpunkt in vielen Batteriesystemen, in denen die sog. Pouch-Zellen eingesetzt werden, ist erheblich verringert. Trotzdem bietet das Speichermodul den elektrischen Speicherzellen die Möglichkeit, sich beim Auf- und/oder Entladen auszudehnen, ohne das im Inneren des Moduls gefährliche Drücke oder mechanische Spannungen aufgebaut werden. Durch die parallele Schaltung der elektrischen Speicherzellen innerhalb des Moduls wird außerdem bewirkt, dass das Modul auch beim Ausfall einer oder mehrerer Speicherzellen weiterhin Strom liefern kann. Bei einer Reihenschaltung wäre hingegen eine sofortige Reparatur oder ein Austausch des Moduls nötig.

Die Aufgabe, einen leistungsstarken, langlebigen und wartungsarmen Energiespeichers bereitzustellen, der zudem robust gegenüber äußeren mechanischen Einflüssen und gegenüber äußeren Umwelteinflüssen ist, wird ferner gelöst durch eine Anordnung zur Bereitstellung elektrischer Energie, umfassend mindestens ein erfindungsgemäßes Speichermodul und mindestens einen Lastentrenner, ausgelegt und eingerichtet um eine elektrisch leitende Verbindung zu unterbrechen, umfassend eine Kommunikationsschnittstelle, mindestens eine Steuereinheit und mindestens ein Relais, ausgelegt und eingerichtet um zwischen einem offenen und einem geschlossenen Zustand hin und her zu schalten, wobei die elektrisch leitende Verbindung im offenen Zustand des Relais unterbrochen ist und die elektrisch leitende Verbindung im geschlossenen Zustand des Relais geschlossen ist, wobei die Steuereinheit ausgelegt und eingerichtet ist, das Relais in Abhängigkeit von Spannung, Stromstärke, elektrischer Leistung und/oder Temperatur in den offenen und/oder den geschlossenen Zustand, insbesondere den offenen Zustand, zu schalten. Ein solcher Lastentrenner schützt angeschlossene Module vor dem Überladen oder Tiefentladen, zu hohen Lade- oder Entladeleistungen und Beschädigungen durch Überhitzung.

Es kann weiterhin vorgesehen sein, dass die Steuereinheit des Lastentrenners ausgelegt und eingerichtet ist, das Relais in Abhängigkeit eines von der Kommunikationsschnittstelle übermittelten Steuersignals in den offenen und/oder geschlossenen Zustand zu schalten. Hierdurch wird es möglich, den Lastentrenner fernzusteuern. Ein offenes Relais kann so z.B. von außen, also ohne dass ein direkter Zugriff auf das Relais erfolgen muss, in den geschlossenen Zustand überführt werden. Ist die Kommunikationsschnittstelle darüber hinaus z.B. mit dem Mobilfunknetz verbunden oder verbindbar, kann eine Fernwartung erfolgen ohne dass ein Techniker direkt vor Ort sein muss. Auch eine Fernabschaltung ist auf diese Weise möglich.

Es kann vorgesehen sein, dass der Lastentrenner in einem Gehäuse angeordnet ist, dessen Maße denen des aus Modulnapf und Moduldeckel gebildeten Modulgehäuses des Speichermoduls im Wesentlichen entsprechen. Eine solche Bauart erleichtert einen modularen Aufbau der Anordnung zur Bereitstellung elektrischer Energie.

Die der Erfindung zugrunde liegende Aufgabe wird ferner gelöst durch einen Trog zur Aufnahme von Speichermodulen, umfassend einen Trogkorpus und einen Trogdeckel und in dem Trogkorpus vorliegend mindestens ein Speichermodul und/oder mindestens einer Anordnung zur Bereitstellung elektrischer Energie.

In einer Ausführungsform kann vorgesehen sein, dass der Trogkorpus und der Trogedeckel flüssigkeitsdicht und/oder staubdicht miteinander verbunden oder verbindbar sind. Eine solche Verbindung erhöht den Schutz gegen äußere Umwelteinflüsse.

Des Weiteren kann vorgesehen sein, dass der Trogdeckel mindestens zwei Trogpole umfasst, welche ausgelegt und eingerichtet sind, elektrischen Strom vom Inneren des geschlossenen Trogs zur Außenseite des geschlossenen Trogs zu leiten, und welche flüssigkeitsdicht und/oder staubdicht mit dem Trogdeckel verbunden oder verbindbar sind.

Es hat sich als zweckmäßig herausgestellt, wenn der Trogdeckel ferner mindestens eine Kommunikationsschnittstelle umfasst, welche eingerichtet und ausgelegt ist, eine Kommunikation, insbesondere eine Übertragung elektrischer Impulse, zwischen dem Inneren des geschlossenen Trogs und der Außenwelt zu ermöglichen, und welche flüssigkeitsdicht und/oder staubdicht mit dem Trogdeckel verbunden oder verbindbar ist. Diese Kommunikationsschnittstelle kann dabei auch mit der Kommunikationsschnittstelle des Lastentrenners verbunden sein, um dessen Kommunikationsdaten zu verarbeiten und/oder weiterzuleiten.

Eine weitere Ausführungsform des erfindungsgemäßen Trogs umfasst mindestens einen Temperatursensor. Dieser kann z.B. mit der mindestens einen Steuereinheit des Lastentrenners verbunden sein. Es kann auch vorgesehen sein, dass die einzelnen Speichermodule über Temperatursensoren verfügen, oder dass an allen Speichermodulen Temperatursensoren angeordnet sind.

Zudem kann der Trog über mindestens eine, insbesondere elektronisch beheizbare, vierte stoßdämpfende Lage, insbesondere aus einem elastischen Kunststoffmaterial, umfassen, welche an einer Innenseite des Trogkorpus, insbesondere an der Innenseite, welche dem Trogdeckel gegenüberliegt, und bei gattungsgemäßem Gebrauch unterhalb des mindestens einen Speichermoduls, insbesondere unterhalb sämtlicher Speichermodule, angeordnet ist.

Hierdurch wird der Inhalt des Trogs gegen mechanische Stöße und Erschütterungen geschützt. Die Heizung kann verwendet werden, um einen Betrieb auch bei tiefen Außentemperaturen zu ermöglichen. Zusätzlich kann gewährleistet werden, dass die vierte stoßdämpfende Lage ihre elastischen Eigenschaften trotz niedriger Temperaturen nicht verliert.

In einer Weiterentwicklung umfasst der Trog mindestens ein Adapterbauelement, eingerichtet und ausgelegt zur Fixierung des Trogs in einem für die Aufnahme von Batterien vorgesehenen Hohlraum, und/oder ferner umfassend mindestens ein Zusatzgewicht. Batteriefächer unterscheiden sich in ihren Maßen häufig von Hersteller zu Hersteller. Ein Adapterbauelement ermöglicht die Einpassung und Fixierung des Trogs in Batteriefächer unterschiedlicher Größen. Auf diese Weise kann ein Trog problemlos in verschiedenen Fahrzeugen und Fahrzeugtypen zum Einsatz kommen. Im Falle von Gabelstaplern übernehmen schwere Bleiakkumulatoren häufig auch die Rolle eines Gegengewichts. Das Zusatzgewicht ermöglicht den Einsatz leistungsfähiger Lithiumionenakkumulatoren, ohne dass die Funktion des Staplers beeinträchtigt wird.

Es kann außerdem vorgesehen sein, dass der Trog mindestens einen, insbesondere metallischen, Niederhalter und mindestens zwei Verbinder umfasst, wobei der mindestens eine Niederhalter zwischen dem Trogdeckel und dem mindestens einen Speichermodul oder der mindestens einen Anordnung zur Bereitstellung elektrischer Energie angeordnet ist.

Es hat sich als nützlich herausgestellt, wenn die Pole der Speichermodule mit den Verbindern elektrisch leitend verbunden sind, so dass die Speichermodule in einer ersten Schaltung verschaltet sind, welche eine Reihenschaltung, eine Parallelschaltung oder eine aus diesen beiden Schaltungsarten gemischte Schaltung darstellt. Hierdurch können die Module entsprechend der gewünschten Arbeitsspannung und Arbeitsleistung verschaltet werden.

Es kann zudem dienlich sein, wenn die erste Schaltung mit dem mindestens einen Lastentrenner in einer zweiten Schaltung verschaltet ist und die zweite Schaltung mit den Trogpolen elektrisch leitend verbunden ist. Der Lastentrenner kann so die Module vor schädlichen Spannungen und Strömen schützen die durch die angeschlossenen Verbraucher oder Ladeschaltungen verursacht werden können.

In einer vorteilhaften Ausgestaltung umfasst der erfindungsgemäße Trog mindestens eine Elektronikeinheit, welche bei gattungsgemäßer Verwendung des Trogs vorzugsweise oberhalb des oder der Speichermodule vorliegt. Hierdurch wird der Zugang zur Elektronikeinheit erleichtert. Die mindestens eine Elektronikeinheit kann insbesondere auch die erste und/oder zweite Schaltung umfassen.

Ferner wird die der Erfindung zu Grunde liegende Aufgabe gelöst durch Transportfahrzeuge, insbesondere Gepäckschlepper, Gabelstapler, Golfcart, Warenlagertransportfahrzeug oder Flugzeugschlepper, enthaltend mindestens ein erfindungsgemäßes Speichermodul, mindestens eine erfindungsgemäße Anordnung zur Bereitstellung elektrischer Energie, und/oder mindestens einen erfindungsgemäßen Trog nach.

Ebenfalls gelöst wird die Aufgabe durch die Verwendung von mindestens einem erfindungsgemäßen Speichermodul, mindestens einer erfindungsgemäßen Anordnung zur Bereitstellung elektrischer Energie und/oder mindestens einem erfindungsgemäßen Trog für die Versorgung von Transportfahrzeugen, besonders ungefederten Transportfahrzeugen, insbesondere Gepäckschleppern, Gabelstaplern, Golfcarts, Warenlagertransportfahrzeugen oder Flugzeugschleppern, mit elektrischer Energie oder als stationäre Energiespeicherquelle.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen:
- Figur 1: ein Schema einer elektrischen Speicherzelle in Form einer sog. Pouch-Zelle;
- Figur 2: eine Ausführungsform eines Einfasselements;
- Figur 3: eine Ausführungsform eines Rahmens für eine stapelförmige Anordnung von elektrischen Speicherzellen;
- Figur 4: eine Ausführungsform des erfindungsgemäßen Speichermoduls;
- Figur 5: eine weitere Ausführungsform eines erfindungsgemäßen Speichermoduls;
- Figur 6: eine weitere Ausführungsform eines erfindungsgemäßen Speichermoduls mit Gehäuse.

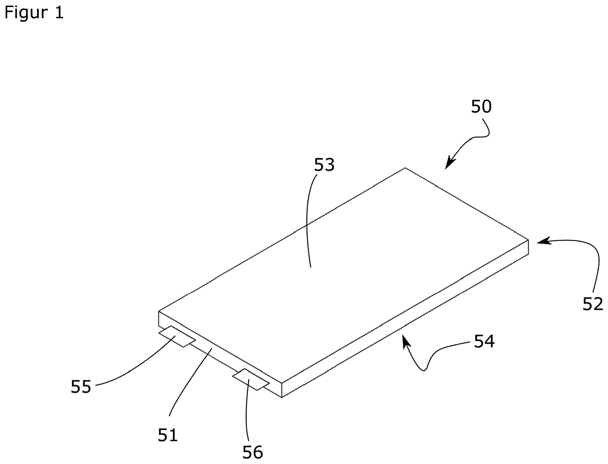

Figur 1 zeigt schematisch eine elektrische Speicherzelle (50) im Pouch-Zellen-Format. Die elektrische Speicherzelle weist eine Kontaktierungsseite (51), auch Vorderseite genannt, eine Rückseite (52), eine Oberseite (53), eine Unterseite (54) und ggf. weitere Seiten auf. An der Kontaktierungsseite sind ein erstes Kontaktelement (55) und ein zweites Kontaktelement (56), einen positiven bzw. einen negativen elektrischen Pol der Speicherzelle darstellend, angeordnet. Bei der dargestellten elektrischen Speicherzelle sind diese als Metalllaschen ausgeführt.

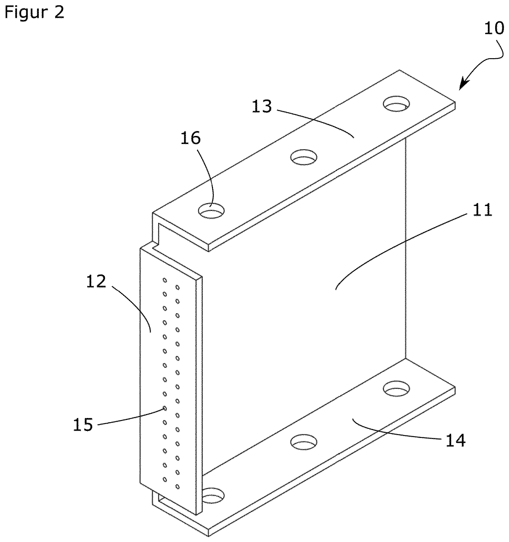

Figur 2 zeigt eine Ausführungsform eines Einfasselements (10). Dieses umfasst einen ersten Teilbereich (11), einen zweiten Teilbereich (12), einen dritten Teilbereich (13) und einen vierten Teilbereich (14). Der zweite (12), dritte (13) und vierte (14) Teilbereich erstrecken sich gleichgerichtet im rechten Winkel vom ersten Teilbereich (11) weg. In dieser Form stellen die vier Teilbereiche des Einfasselements (10) Teile vierer benachbarter Seiten eines Hohlquaders dar. Der zweite Teilbereich (12) weist eine Vielzahl erster Löcher (15) auf. Der dritte (13) und in dieser Ausführung auch der vierte Teilbereich (14) weisen zweite Löcher (16) auf.

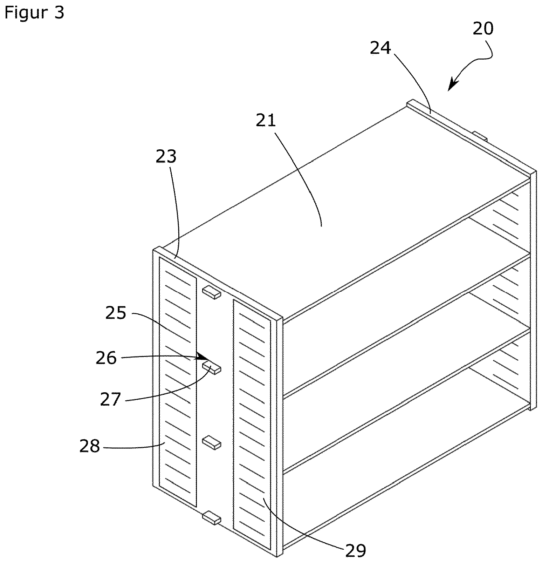

Figur 3 zeigt Komponenten eines erfindungsgemäßen Speichermoduls (20). Zu sehen ist eine Vielzahl an Trägerplatten (21), eine Platinenplatte (23) und eine Rückseitenplatte (24). Die Platinenplatte (23) und in dieser Ausführung auch die Rückseitenplatte (24) weisen erste Durchtrittsöffnungen (25), und zweite Durchtrittsöffnungen (26) auf. Die Trägerplatten (21) weisen an ihren Vorder- und Rückseiten Vorsprünge (27) auf. Diese Vorsprünge (27) greifen in die zweiten Durchtrittsöffnungen (26) der Platinenplatte (23) und der Rückseitenplatte (24) ein. Die Platinenplatte (23) weist ferner im Bereich der ersten Öffnungen eine erste Metalllage (28) und eine zweite Metalllage (29) auf. Platinenplatte (23) und Rückseitenplatte (24) können identisch gefertigt sein. Im Falle der Rückseitenplatte (24) kann allerdings auf die ersten Durchtrittsöffnungen (25) und die erste (28) und zweite Metalllage (29) verzichtet werden.

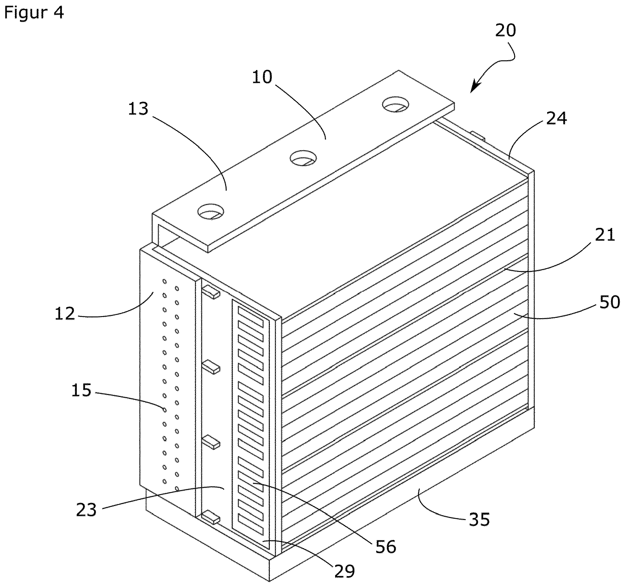

Figur 4 zeigt eine Ausführungsform eines erfindungsgemäßen Speichermoduls (20). Zur besseren Einsicht ist nur ein Einfasselement (10) dargestellt. Eine stapelförmige Anordnung einer Vielzahl von elektrischen Speicherzellen (50) wird durch die Rahmenkonstruktion aus Platinenplatte (23), Rückseitenplatte (24) und Trägerplatten (21) eingerahmt. Die ersten Kontaktelemente (55, nicht dargestellt) und zweiten Kontaktelemente (56) wurden durch die ersten Durchtrittsöffnungen (25) geführt und nach oben hin umgekämmt, so dass sie zumindest abschnittsweise parallel zur Vorderseite der Platinenplatte (23) im Bereich der ersten (28, nicht dargestellt) und zweiten Metallage (29) angeordnet sind. Das Einfasselement (10) liegt mit seinem ersten Teilbereich an einer Seite der stapelförmigen Anordnung der Vielzahl an elektrischen Speicherzellen an. Der zweite Teilbereich (12) des Einfasselements (10) liegt an der Vorderseite der Platinenplatte (23) und den dort angeordneten, umgekämmten Abschnitten der ersten Kontaktelemente der Speicherzellen (50) an. In dieser Ausführungsform liegt der dritte Teilbereich (13) des Einfasselements (10) von der obersten Trägerplatte (21) beabstandet vor. Ebenso liegt der vierte Teilbereich (14, nicht dargestellt) des Einfasselements (10) beabstandet von der untersten Trägerplatte (21) vor.

In der hier dargestellten Ausführungsform ist in dem Zwischenraum zwischen dem vierten Teilbereich (14) des Einfasselements (10) und der untersten Trägerplatte (21) eine zweite stoßdämpfende Lage (35) angeordnet.

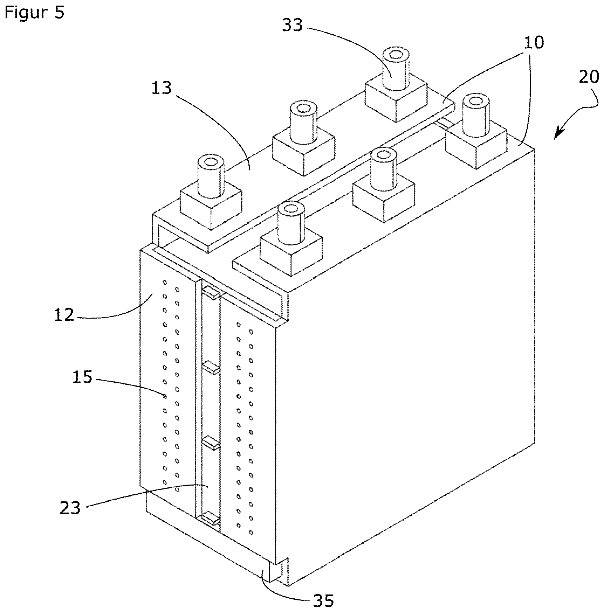

Figur 5 zeigt eine weiter Ausführungsform eines erfindungsgemäßen Speichermoduls (20) mit einem Einfassmodul bestehend aus zwei Einfasselementen (10). An den dritten Teilbereichen (13) der Einfasselemente (10) sind jeweils drei elektrische Pole (33) elektrisch leitend angeordnet. Die Einfasselemente (10) liegen voneinander beabstandet vor.

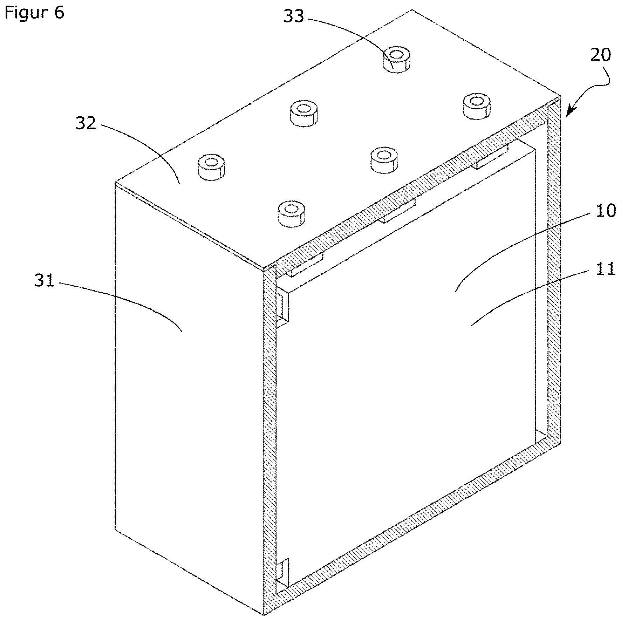

Figur 6 zeigt eine weitere Ausführungsform eines erfindungsgemäßen Speichermoduls (20) mit Gehäuse. Zur besseren Einsicht sind Moduldeckel (32) und Modulnapf (31) nicht vollständig dargestellt, sondern an den schraffierten Flächen aufgeschnitten. Das Gehäuse, bestehend aus Modulnapf (31) und Moduldeckel (32) fasst das Einfassmodul (10) und die davon eigefassten Komponenten ein. Die elektrischen Pole (33) sind mit dem Moduldeckel (32) verbunden. Weiterhin sind die elektrischen Pole (33) mit den Einfasselementen (10) elektrisch leitend verbunden.

## Patentansprüche

1. Speichermodul (20), umfassend
eine stapelförmige Anordnung einer Vielzahl an elektrischen Speicherzellen (50), insbesondere von mindestens 5, bevorzugt mindestens 10 und besonders bevorzugt mindestens 15 elektrischen Speicherzellen (50), mit einer Kontaktierungsseite (51) und einer der Kontaktierungsseite (51) gegenüberliegenden Rückseite (52) sowie einer sich zwischen Kontaktierungs- (51) und Rückseite (52) erstreckenden Oberseite (53) und einer der Oberseite (53) gegenüberliegenden, sich zwischen Kontaktierungs- (51) und Rückseite (52) erstreckenden Unterseite (54),
eine Vielzahl an Trägerplatten (21) mit einem zu der Kontaktierungsseite (51) korrespondierenden vorderseitigen Rand und einem gegenüberliegenden rückseitigen Rand und
eine Platinenplatte (23) sowie
gegebenenfalls eine Rückseitenplatte (24),
wobei die Kontaktierungsseiten (51) der Speicherzellen (50) auf derselben Seite der Anordnung vorliegen,
wobei die Trägerplatten (21) der Vielzahl an Trägerplatten (21) jeweils zwischen benachbarten Speicherzellen (50) vorliegen,
wobei die Speicherzellen (50) jeweils über ein erstes (55) und ein zweites Kontaktelement (56) auf der Kontaktierungsseite (51), einen positiven bzw. einen negativen elektrischen Pol der Speicherzelle (50) darstellend, insbesondere in Form einer elektrisch leitfähigen Metalllasche, verfügen und
wobei die Platinenplatte (23) erste Durchtrittsöffnungen (25), insbesondere in Schlitzform, für die ersten (55) und zweiten Kontaktelemente (56) aufweist,
ein Einfassmodul, umfassend oder bestehend aus einem ersten Einfasselement (10) und einem räumlich hiervon getrennten, insbesondere identischen, zweiten Einfasselement (10'),
jeweils eingerichtet und ausgelegt zum Einfassen und elektrischen Kontaktieren einer, insbesondere im Wesentlichen quaderförmigen, stapelförmigen Anordnung der Vielzahl an elektrischen Speicherzellen (50), umfassend mindestens einen ersten im Wesentlichen flächigen Teilbereich (11), eingerichtet und ausgelegt zur Anlage an einer ersten Seitenfläche der Anordnung der elektrischen Speicherzellen (50),
mindestens einen zweiten im Wesentlichen flächigen Teilbereich (12), eingerichtet und ausgelegt zur Anlage an einer zweiten Seitenfläche der Anordnung der elektrischen Speicherzellen (50), und
mindestens einen dritten im Wesentlichen flächigen Teilbereich (13), eingerichtet und ausgelegt, um anliegend oder beabstandet von der Anordnung der elektrischen Speicherzellen (50) anbringbar zu sein, wenn der erste Teilbereich (11) und der zweite Teilbereich (12) sich in Anlage mit der ersten bzw. zweiten Seitenfläche der Anordnung der elektrischen Speicherzellen (50) befinden, sowie
gegebenenfalls mindestens einen vierten im Wesentlichen flächigen Teilbereich (14), eingerichtet und ausgelegt, um gegenüberliegend von dem dritten Teilbereich (13) anliegend oder beabstandet von der Anordnung der elektrischen Speicherzellen (50) anbringbar zu sein,
wobei der erste (11), zweite (12), dritte (13) und gegebenenfalls vierte Teilbereich (14) miteinander verbunden, insbesondere einstückig ausgeführt, sind,
wobei der zweite Teilbereich (12) des ersten Einfasselements (10) und der zweite Teilbereich (12) des zweiten Einfasselements (10') an der Platinenplatte (23) anliegen,
wobei der erste Teilbereich (11) des ersten Einfasselements (10) an der sich zwischen der Kontaktierungsseite (51) und der Rückseite (52) erstreckenden ersten Seitenfläche der stapelförmigen Anordnung der Vielzahl an elektrischen Speicherzellen (50) anliegt,
wobei der erste Teilbereich (11) des zweiten Einfasselements (10') an der sich zwischen der Kontaktierungsseite (51) und der Rückseite (52) erstreckenden, der ersten Seitenfläche gegenüberliegenden zweiten Seitenfläche der stapelförmigen Anordnung der Vielzahl an elektrischen Speicherzellen (50) anliegt und
wobei die beiden Einfasselemente (10, 10') elektrisch isoliert voneinander, insbesondere voneinander beabstandet, vorliegen, wobei
der dritte Teilbereich (13) des ersten Einfasselements (10) und der dritte Teilbereich (13) des zweiten Einfasselements (10') beabstandet von und insbesondere im Wesentlichen parallel zu der Oberseite (53) der stapelförmigen Anordnung der Vielzahl an elektrischen Speicherzellen (50) vorliegen und/oder dass
der vierte Teilbereich (14) des ersten Einfasselements (10) und der vierte Teilbereich (14) des zweiten Einfasselements (10') beabstandet von und insbesondere im Wesentlichen parallel zu der Unterseite (54) der stapelförmigen Anordnung der Vielzahl an elektrischen Speicherzellen (50) vorliegen.

2. Speichermodul (20) nach Anspruch 1, **dadurch gekennzeichnet, dass**
das erste (10) und das zweite Einfasselement (10'), insbesondere der erste (11), der zweite (12) und der dritte Teilbereich (13) sowie gegebenenfalls der vierte Teilbereich (14) des ersten (10) und des zweiten Einfasselements (10'), aus einem stromleitfähigen Material, welches eine elektrische Leitfähigkeit von mehr als 1×10⁶ S/m, bevorzugt mehr als 20×10⁶ S/m, besonders bevorzugt mehr als 35×10⁶ S/m, insbesondere mehr als 50×10⁶ S/m, jeweils bei einer Temperatur von 300K aufweist, besteht oder ein solches Material umfasst, und/oder
dass dieses, insbesondere der erste (11), der zweite (12) und der dritte Teilbereich (13) sowie gegebenenfalls der vierte Teilbereich (14), aus einem Material besteht oder dieses umfasst, welches eine Wärmeleitfähigkeit von mehr als 50 W/(m K), bevorzugt mehr als 100 W/(m K), besonders bevorzugt von mehr als 200 W/(m K), jeweils bei einer Temperatur von 0°C, aufweist.

3. Speichermodul (20) nach Anspruch 1 oder 2, **dadurch gekennzeichnet, dass**
die Platinenplatte (23) über zweite Durchtrittsöffnungen (26) oder Einbuchtungen verfügt, insbesondere entlang des im Wesentlichen zentralen longitudinalen Abschnitts der Platinenplatte (23) angeordnet, und dass die Trägerplatten (21) an dem vorderseitigen Rand mit mindestens einem ersten Vorsprung (27) ausgestattet sind, eingerichtet und ausgelegt um in die jeweils korrespondierenden zweiten Durchtrittsöffnungen (26) oder Einbuchtungen der Platinenplatte (23), insbesondere rastend, einzugreifen, und/oder dass
die Rückseitenplatte (24) über dritte Durchtrittsöffnungen oder Einbuchtungen verfügt, insbesondere entlang des im Wesentlichen zentralen longitudinalen Abschnitts der Rückseitenplatte (24) angeordnet, und dass die Trägerplatten (21) an dem rückseitigen Rand mit mindestens einem zweiten Vorsprung (27') ausgestattet sind, eingerichtet und ausgelegt, um in die jeweils korrespondierenden dritten Durchtrittsöffnungen der Rückseitenplatte (24), insbesondere rastend, einzugreifen.

4. Speichermodul (20) nach einem der Ansprüche 1 bis 3, ferner enthaltend mindestens einen Moduldeckel (32) ausgestattet mit einer Vielzahl an elektrischen Polen (33), insbesondere einer geraden Anzahl an elektrischen Polen (33), bevorzugt mindestens 2 Polen, besonders bevorzugt mindestens 4 Pole und ganz besonders bevorzugt mindestens 6 Polen, welche ausgelegt und eingerichtet sind, eine elektrisch leitende Verbindung mit den Speicherzellen (50) herzustellen.

5. Speichermodul (20) nach Anspruch 4, ferner enthaltend
einen Modulnapf (31) mit Napfseitenwänden und einem Napfboden, wobei der Moduldeckel (32), insbesondere mittels Verklebens, mit dem Modulnapf (31), insbesondere flüssigkeits- und/oder staubdicht, verbunden oder verbindbar ist.

6. Speichermodul (20) nach Anspruch 5, ferner umfassend zwischen der Unterseite (54) der stapelförmigen Anordnung der Vielzahl an elektrischen Speicherzellen (50) und dem Napfboden mindestens eine erste stoßdämpfende Lage (35) oder zwischen der Unterseite (54) der stapelförmigen Anordnung der Vielzahl an elektrischen Speicherzellen (50) und den vierten Teilbereichen (14) von erstem (10) und zweitem Einfasselement (10') mindestens eine zweite stoßdämpfende Lage (35') und/oder zwischen den vierten Teilbereichen (14) von erstem (10) und zweitem Einfasselement (10') und Napfboden mindestens eine dritte stoßdämpfende Lage (35").

7. Anordnung zur Bereitstellung elektrischer Energie, umfassend mindestens ein Speichermodul (20) nach einem der Ansprüche 1 bis 6 und mindestens einen Lastentrenner, ausgelegt und eingerichtet um eine elektrisch leitende Verbindung zu unterbrechen, umfassend eine Kommunikationsschnittstelle, mindestens eine Steuereinheit und mindestens ein Relais, ausgelegt und eingerichtet um zwischen einem offenen und einem geschlossenen Zustand hin- und herzuschalten,
wobei die elektrisch leitende Verbindung im offenen Zustand des Relais unterbrochen ist und die elektrisch leitende Verbindung im geschlossenen Zustand des Relais geschlossen ist,
wobei die Steuereinheit ausgelegt und eingerichtet ist, das Relais in Abhängigkeit von Spannung, Stromstärke, elektrischer Leistung und/oder Temperatur in den offenen und/oder den geschlossenen Zustand, insbesondere den offenen Zustand, zu schalten.

8. Trog zur Aufnahme von Speichermodulen (20), umfassend
einen Trogkorpus und einen Trogdeckel und in dem Trogkorpus vorliegend mindestens ein Speichermodul (20) nach einem der Ansprüche 1 bis 6, insbesondere nach Anspruch 5 oder 6, und/oder
mindestens einer Anordnung zur Bereitstellung elektrischer Energie nach Anspruch 7.

9. Trog nach Anspruch 8, **dadurch gekennzeichnet, dass**
der Trogdeckel mindestens zwei Trogpole umfasst, welche ausgelegt und eingerichtet sind, elektrischen Strom vom Inneren des geschlossenen Trogs zur Außenseite des geschlossenen Trogs zu leiten, und welche flüssigkeitsdicht und/oder staubdicht mit dem Trogdeckel verbunden oder verbindbar sind, und/oder dass
der Trogdeckel ferner mindestens eine Kommunikationsschnittstelle umfasst, welche eingerichtet und ausgelegt ist, eine Kommunikation, insbesondere eine Übertragung elektrischer Impulse, zwischen dem Inneren des geschlossenen Trogs und der Außenwelt zu ermöglichen, und welche flüssigkeitsdicht und/oder staubdicht mit dem Trogdeckel verbunden oder verbindbar ist.

10. Trog nach Anspruch 8 oder 9, ferner umfassend
mindestens einen, insbesondere metallischen, Niederhalter und mindestens zwei Verbinder, wobei der mindestens eine Niederhalter zwischen dem Trogdeckel und dem mindestens einen Speichermodul (20) oder der mindestens einen Anordnung zur Bereitstellung elektrischer Energie angeordnet ist, und/oder ferner umfassend mindestens eine Elektronikeinheit, welche bei gattungsgemäßer Verwendung des Trogs vorzugsweise oberhalb des oder der Speichermodule (20) vorliegt.

11. Transportfahrzeug, insbesondere Gepäckschlepper, Gabelstapler, Golfcart, Warenlagertransportfahrzeug oder Flugzeugschlepper, enthaltend mindestens ein Speichermodul (20) nach einem der Ansprüche 1 bis 6, mindestens eine Anordnung zur Bereitstellung elektrischer Energie nach Anspruch 7 und/oder mindestens einen Trog nach einem der Ansprüche 8 bis 10.

12. Verwendung von mindestens einem Speichermodul (20) nach einem der Ansprüche 1 bis 6, mindestens einer Anordnung zur Bereitstellung elektrischer Energie nach Anspruch 7 und/oder mindestens einem Trog nach einem der Ansprüche 8 bis 10, insbesondere nach Anspruch 9, für die Versorgung von Transportfahrzeugen, insbesondere Gepäckschleppern, Gabelstaplern, Golfcarts, Warenlagertransportfahrzeugen oder Flugzeugschleppern, mit elektrischer Energie oder als stationäre Energiespeicherquelle.

## Claims

1. A storage module (20), comprising
a stacked arrangement of a plurality of electrical storage cells (50), in particular of at least 5, preferably at least 10 and, particularly preferably at least 15 electrical storage cells (50), with a contacting side (51) and a rear side (52) opposite the contacting side (51), as well as an upper side (53) extending between the contacting side (51) and the rear side (52) and a lower side (54) opposite the upper side (53) extending between the contacting side (51) and the rear side (52),
a plurality of carrier plates (21) with a front-side edge corresponding to the contacting side (51) and an opposite rear-side edge, and
a circuit board plate (23) as well as
optionally, a rear side plate (24),
wherein the contacting sides (51) of the storage cells (50) are present on the same side of the arrangement,
wherein the carrier plates (21) of the plurality of carrier plates (21) are respectively present between adjacent storage cells (50),
wherein the storage cells (50) each have a first (55) and a second contact element (56) on the contacting side (51), representing a positive or a negative electrical pole of the storage cell (50), in particular in the form of an electrically conductive metal tongue, and
wherein the circuit board plate (23) has first passage openings (25), in particular in the form of slits, for the first (55) and second contact elements (56), an enclosure module comprising or consisting of a first enclosing element (10) and a second enclosing element (10') which is spatially separated from said first enclosing element and in particular identical thereto,
which are each adapted and arranged to enclose and electrically contact a stacked arrangement, which is in particular substantially cuboid, of the plurality of electrical storage cells (50), comprising
at least one first substantially flat partial area (11), adapted and arranged to be brought into contact with a first side surface of the arrangement of the electrical storage cells (50),
at least one second substantially flat partial area (12), adapted and arranged to be brought into contact with a second side surface of the arrangement of the electrical storage cells (50), and
at least one third substantially flat partial area (13), adapted and arranged to be attached, lying in contact with or at a distance from the arrangement of the electrical storage cells (50), when the first partial area (11) and the second partial area (12) are in contact with the first or second side surface of the arrangement of the electrical storage cells (50), as well as
optionally at least one fourth substantially flat partial area (14), adapted and arranged to be attachable opposite the third partial area (13), lying in contact with or at a distance from the arrangement of the electrical storage cells (50),
wherein the first (11), second (12), third (13) and, optionally fourth partial areas (14) are connected with one another, in particular designed as a single piece,
wherein the second partial area (12) of the first enclosing element (10) and the second partial area (12) of the second enclosing element (10') lie in contact with the circuit board plate (23),
wherein the first partial area (11) of the first enclosing element (10) lies in contact with the first side surface of the stacked arrangement of the plurality of electrical storage cells (50), which extends between the contacting side (51) and the rear side (52),
wherein the first partial area (11) of the second enclosing element (10') lies in contact with the second side surface of the stacked arrangement of the plurality of electrical storage cells (50), which extends between the contacting side (51) and the rear side (52),positioned opposite the first side surface, and
wherein the two enclosing elements (10, 10') are electrically insulated from one another, in particular at a distance from one another, wherein
the third partial area (13) of the first enclosing element (10) and the third partial area (13) of the second enclosing element (10') are at a distance from and in particular substantially parallel to the upper side (53) of the stacked arrangement of the plurality of electrical storage cells (50) and/or wherein the fourth partial area (14) of the first enclosing element (10) and the fourth partial area (14) of the second enclosing element (10') are at a distance from and in particular substantially parallel to the lower side (54) of the stacked arrangement of the plurality of electrical storage cells (50).

2. The storage module (20) according to Claim 1, **characterized in that** the first (10) and the second enclosing element (10'), in particular the first (11), the second (12) and the third partial area (13) as well as optionally the fourth partial area (14) of the first (10) and the second enclosing element (10'), consist of or comprise an electrically conductive material which has an electrical conductivity of more than 1×10⁶ S/m, preferably more than 20×10⁶ S/m, particularly preferably more than 35×10⁶ S/m, in particular more than 50×10⁶ S/m, in each case at a temperature of 300 K, and/or
**in that** said enclosing element, in particular the first (11), the second (12) and the third partial area (13) as well as, optionally, the fourth partial area (14), consists of a material or comprises said material which has a thermal conductivity of more than 50 W/(m K), preferably more than 100 W/(m K), particularly preferably of more than 200 W/(m K), in each case at a temperature of 0 °C.

3. The storage module (20) according to Claim 1 or 2, **characterized in that**
the circuit board plate (23) has second passage openings (26) or recesses, disposed in particular along the substantially central longitudinal section of the circuit board plate (23), and **in that** the carrier plates (21) on the front-side edge are equipped with at least one first protrusion (27), adapted and arranged to engage in the respective corresponding second passage openings (26) or recesses of the circuit board plate (23), in particular in a latching manner, and/or **in that**
the rear side plate (24) has third passage openings or recesses, disposed in particular along the substantially central longitudinal section of the rear side plate (24), and **in that** the carrier plates (21) on the rear-side edge are equipped with at least one second protrusion (27'), adapted and arranged to engage in the respective corresponding third passage openings of the rear side plate (24), in particular in a latching manner.

4. The storage module (20) according to any one of Claims 1 to 3, further containing at least one module lid (32) equipped with a plurality of electrical poles (33), in particular an even number of electrical poles (33), preferably at least 2 poles, particularly preferably at least 4 poles and very particularly preferably at least 6 poles which are adapted and arranged to create an electrically conductive connection with the storage cells (50).

5. The storage module (20) according to Claim 4, further containing a module bowl (31) with bowl side walls and a bowl floor, wherein the module lid (32) is connected or connectable, in particular by adhesion, with the module bowl (31), in particular in a fluid-tight and/or dust-tight manner.

6. The storage module (20) according to Claim 5, further comprising,
between the lower side (54) of the stacked arrangement of the plurality of electrical storage cells (50) and the bowl floor, at least one first impact-dampening layer (35) or between the lower side (54) of the stacked arrangement of the plurality of electrical storage cells (50) and the fourth partial areas (14) of the first (10) and second enclosing element (10'), at least one second impact-dampening layer (35') and/or between the fourth partial areas (14) of the first (10) and second enclosing element (10') and the bowl floor, at least one third impact-dampening layer (35").

7. An arrangement for providing electrical energy, comprising
at least one storage module (20) according to any one of Claims 1 to 6 and at least one load disconnector which is adapted and arranged to interrupt an electrically conductive connection, comprising a communication interface, at least one control unit and at least one relay, adapted and arranged to switch back and forth between an open and a closed state,
wherein the electrically conductive connection is interrupted when the relay is in the open state, and the electrically conductive connection is closed when the relay is in the closed state,
wherein the control unit is adapted and arranged to switch the relay into the open and/or the closed state, in particular into the open state, depending on the voltage, current strength, electrical capacity and/or temperature.

8. A trough for receiving storage modules (20), comprising
a trough body and a trough lid and at least one storage module (20) present in the trough body according to any one of Claims 1 to 6, in particular according to Claim 5 or 6, and/or
at least one arrangement for providing electrical energy according to Claim 7.

9. The trough according to Claim 8, **characterized in that**
the trough lid comprises at least two trough poles which are adapted and arranged to conduct electric power from the interior of the closed trough to the outer side of the closed trough, and which are connected or connectable with the trough lid in a fluid-tight and/or dust-tight manner, and/or **in that**
the trough lid further comprises at least one communication interface which is adapted and arranged to enable communication, in particular a transmission of electrical impulses, between the interior of the closed trough and the outside world, and which is connected or connectable with the trough lid in a fluid-tight and/or dust-tight manner.

10. The trough according to Claim 8 or 9, further comprising
at least one, in particular metallic, hold-down clamp and at least two connectors, wherein the at least one hold-down clamp is disposed between the trough lid and the at least one storage module (20) or the at least one arrangement for providing electrical energy, and/or further comprising at least one electronic unit which, during generic use of the trough, is preferably above the storage module or storage modules (20).

11. A transport vehicle, in particular a baggage tow truck, forklift truck, golf cart, goods storage transport vehicle or airplane tow truck, containing at least one storage module (20) according to any one of Claims 1 to 6, at least one arrangement for providing electrical energy according to Claim 7, and/or at least one trough according to any one of Claims 8 to 10.

12. Use of at least one storage module (20) according to any one of Claims 1 to 6, at least one arrangement for providing electrical energy according to Claim 7, and/or at least one trough according to any one of Claims 8 to 10, in particular according to Claim 9, for the supply of transport vehicles, in particular baggage tow trucks, forklift trucks, golf carts, goods storage transport vehicles or airplane tow trucks with electrical energy or as a stationary energy storage source.

## Revendications

1. Module d'accumulation (20), comprenant
un dispositif formant un empilement d'une multiplicité de cellules de stockage électriques (50), en particulier au moins 5, de préférence au moins 10 et particulièrement de préférence 15 cellules de stockage électriques (50), avec un côté d'établissement de contact (51) et un côté arrière (52) à l'opposé du côté d'établissement de contact (51) ainsi qu'un côté supérieur (53) s'étendant entre le côté d'établissement de contact (51) et le côté arrière (52) et un côté inférieur (54) à l'opposé du côté supérieur (53), s'étendant entre le côté d'établissement de contact (51) et le côté arrière (52),
une multiplicité de plaques supports (21) avec un bord avant correspondant au côté d'établissement de contact (51) et un bord arrière opposé et
une plaque de platine (23) ainsi que,
le cas échéant, une plaque arrière (24),
les côtés d'établissement de contact (51) des cellules de stockage (50) se trouvant sur le même côté du dispositif,
les plaques supports (21) de la multiplicité de plaques supports (21) se trouvant respectivement entre les cellules de stockage voisines (50),
les cellules de stockage (50) présentant respectivement d'un premier (55) et d'un deuxième élément de contact (56) sur le côté d'établissement de contact (51), représentant un pôle électrique positif ou négatif (50), en particulier sous la forme d'une languette de métal électroconductrice, et
la platine (23) présentant des premiers orifices de passage (25), en particulier en forme de fentes, pour les premiers (55) et deuxièmes éléments de contact (56), un module bordure, comprenant ou se composant d'un premier élément bordure (10) et d'un deuxième élément bordure (10'), en particulier identique, spatialement séparé de celui-ci,
respectivement agencés et conçus pour border, et établir un contact électrique avec, un dispositif formant un empilement de la multiplicité de cellules de stockage électriques (50), en particulier essentiellement de forme parallélépipédique, comprenant au moins une première zone partielle (11) essentiellement plane, agencée et conçue pour la mise en contact avec une première surface latérale du dispositif des cellules de stockage électriques (50),
au moins une deuxième zone partielle (12) essentiellement plane, agencée et conçue pour la mise en contact avec une deuxième surface latérale du dispositif des cellules de stockage électriques (50), et
au moins une troisième zone partielle (13) essentiellement plane, agencée et conçue pour pouvoir être montée de façon adjacente au, ou à distance du, dispositif des cellules de stockage électriques (50), lorsque la première zone partielle (11) et la deuxième zone partielle (12) se trouvent en contact avec la première ou la deuxième surface latérale du dispositif des cellules de stockage électriques (50), ainsi que,
le cas échéant, au moins une quatrième zone partielle (14) essentiellement plane, agencée et conçue pour pouvoir être montée de façon adjacente au, ou à distance du, dispositif des cellules de stockage électriques (50), de façon opposée à la troisième zone partielle (13),
la première (11), la deuxième (12), la troisième (13) et, le cas échéant, la quatrième (14) zones partielles étant reliées ensemble, en particulier d'un seul tenant,
la deuxième zone partielle (12) du premier élément bordure (10) et la deuxième zone partielle (12) du deuxième élément bordure (10') étant en contact avec la platine (23), la première zone partielle (11) du premier élément bordure (10) étant en contact avec la première surface latérale du dispositif formant un empilement de la multiplicité de cellules de stockage électriques (50), s'étendant entre le côté d'établissement de contact (51) et le côté arrière (52),
la première zone partielle (11) du deuxième élément bordure (10') étant en contact avec la deuxième surface latérale du dispositif formant un empilement de la multiplicité de cellules de stockage électriques (50), s'étendant entre le côté d'établissement de contact (51) et le côté arrière (52), à l'opposé de la première surface latérale, et
les deux éléments bordures (10, 10') étant isolés électriquement l'un de l'autre, en particulier étant à distance l'un de l'autre,
la troisième zone partielle (13) du premier élément bordure (10) et la troisième zone partielle (13) du deuxième élément bordure (10') étant à distance du, et en particulier essentiellement parallèle au, côté supérieur (53) du dispositif formant un empilement de la multiplicité de cellules de stockage électriques (50) et/ou la quatrième zone partielle (14) du premier élément bordure (10) et la quatrième zone partielle (14) du deuxième élément bordure (10') étant à distance du, et en particulier essentiellement parallèle au, côté inférieur (54) du dispositif formant un empilement de la multiplicité de cellules de stockage électriques (50).

2. Module d'accumulation (20) selon la revendication 1, **caractérisé en ce que**
le premier (10) et le deuxième (10') élément bordure, en particulier la première (11), la deuxième (12) et la troisième (13) zones partielles ainsi que, le cas échéant, la quatrième (14) zone partielle du premier (10) et du deuxième (10') éléments bordures se composent d'un matériau électroconducteur, lequel présente une conductivité électrique supérieure à 1 × 10⁶ S/m, de préférence supérieure à 20 × 10⁶ S/m, particulièrement de préférence supérieure à 35 × 10⁶ S/m, en particulier supérieure à 50 × 10⁶ S/m, respectivement à une température de 300 K, ou comprend un tel matériau, et/ou
**en ce que** celui-ci, en particulier la première (11), la deuxième (12) et la troisième (13) zone partielle ainsi que, le cas échéant, la quatrième (14) zone partielle se compose d'un matériau présentant une conductivité thermique supérieure à 50 W/(m K), de préférence supérieure à 100 W/(m K), particulièrement de préférence supérieure à 200 W/(m K), respectivement à une température de 0 °C, ou comprend ce matériau.

3. Module d'accumulation (20) selon la revendication 1 ou 2, **caractérisé en ce que**
la platine (23) dispose de deuxièmes orifices de passage (26) ou creux, en particulier disposés le long de la section essentiellement centrale longitudinale de la platine (23), et **en ce que** les plaques supports (21) sont munies d'au moins une première saillie (27) sur le bord avant, agencée et conçue pour s'engager dans les deuxièmes orifices de passage (26) ou creux de la platine (23) correspondant respectivement, en particulier par encliquetage, et/ou **en ce que**
la plaque de côté arrière (24) dispose de troisièmes orifices de passage ou de creux, en particulier disposés le long de la section essentiellement centrale longitudinale de la plaque de côté arrière (24), et **en ce que** les plaques supports (21) sont munies d'au moins une deuxième saillie (27') sur le bord arrière, agencée et conçue pour s'engager dans les troisièmes orifices de passage de la plaque de côté arrière (24) correspondant respectivement, en particulier par encliquetage.

4. Module d'accumulation (20) selon l'une des revendications 1 à 3, comprenant en outre au moins un couvercle de module (32) muni d'une multiplicité de pôles électriques (33), en particulier d'un nombre pair de pôles électriques (33), de préférence d'au moins 2 pôles, en particulier de préférence d'au moins 4 pôles et tout particulièrement de préférence d'au moins 6 pôles, lesquels sont conçus et agencés afin d'établir une liaison électroconductrice avec les cellules de stockage (50).

5. Module d'accumulation (20) selon la revendication 4, comprenant en outre un godet de module (31) avec des parois latérales de godet et un fond de godet, le couvercle de module (32) étant ou pouvant être relié au godet de module (31), en particulier de façon étanche aux liquides ou étanche à la poussière, en particulier par collage.

6. Module d'accumulation (20) selon la revendication 5, comprenant en outre au moins une première couche amortissant les chocs (35) entre le côté inférieur (54) du dispositif formant un empilement de la multiplicité de cellules de stockage électriques (50) et le fond de godet ou au moins une deuxième couche amortissant les chocs (35') entre le côté inférieur (54) du dispositif formant un empilement de la multiplicité de cellules de stockage électriques (50) et les quatrièmes zones partielles (14) des premier (10) et deuxième (10') éléments bordures et/ou au moins une troisième couche amortissant les chocs (35") entre les quatrièmes zones partielles (14) des premier (10) et deuxième (10') éléments bordures et le fond de godet.

7. Dispositif pour la mise à disposition d'énergie électrique, comprenant
au moins un module d'accumulation (20) selon l'une des revendications 1 à 6 et au moins un séparateur de charge, conçu et agencé afin de couper une liaison électrique conductrice, comprenant une interface de communication, au moins une unité de commande et au moins un relais, conçu et agencé pour commuter entre un état ouvert et un état fermé,
la liaison électroconductrice étant coupée dans l'état ouvert du relais et la liaison électroconductrice étant établie dans l'état fermé du relais,
l'unité de commande étant conçue et agencée pour commuter le relais en fonction de la tension, de l'intensité du courant, de la puissance électrique et/ou de la température dans l'état ouvert et/ou fermé, en particulier dans l'état ouvert.

8. Bac pour l'accueil de modules d'accumulation (20), comprenant
un corps de bac et un couvercle de bac et, disposé dans le corps de bac, au moins un module d'accumulation (20) selon l'une des revendications 1 à 6, en particulier selon la revendication 5 ou 6, et/ou
au moins un dispositif pour la mise à disposition d'énergie électrique selon la revendication 7.

9. Bac selon la revendication 8, **caractérisé en ce que**
le couvercle de bac comprend au moins deux pôles de bac, lesquels sont conçus et agencés pour conduire du courant électrique de l'intérieur du bac fermé vers le côté extérieur du bac fermé, et lesquels sont ou peuvent être reliés au couvercle de bac de façon étanche aux liquides et/ou étanche à la poussière, et/ou **en ce que**
le couvercle de bac comprend en outre au moins une interface de communication, laquelle est agencée et conçue pour permettre une communication, en particulier une transmission d'impulsions électriques, entre l'intérieur du bac fermé et le monde extérieur, et laquelle est ou peut être reliée au couvercle de bac de façon étanche aux liquides et/ou étanche à la poussière.

10. Bac selon la revendication 8 ou 9, comprenant en outre
au moins un serre-flan, en particulier métallique, et au moins deux éléments de liaison, l'au moins un serre-flan étant disposé entre le couvercle de bac et l'au moins un module d'accumulation (20) ou l'au moins un dispositif pour la mise à disposition d'énergie électrique, et/ou comprenant en outre au moins une unité électronique, laquelle se trouve de préférence au-dessus du ou des modules d'accumulation (20), lors d'une utilisation du bac conforme au genre.

11. Véhicule de transport, en particulier tracteur à bagages, chariot élévateur, voiturette de golf, véhicule de transport d'entrepôt de marchandises ou remorqueur d'aviation, comprenant au moins un module d'accumulation (20) selon l'une des revendications 1 à 6, au moins un dispositif pour la mise à disposition d'énergie électrique selon la revendication 7 et/ou au moins un bac selon l'une des revendications 8 à 10.

12. Utilisation d'au moins un module d'accumulation (20) selon l'une des revendications 1 à 6, d'au moins un dispositif pour la mise à disposition d'énergie électrique selon la revendication 7 et/ou d'au moins un bac selon l'une des revendications 8 à 10, en particulier selon la revendication 9, pour l'alimentation en énergie électrique de véhicules de transport, en particulier de tracteurs à bagages, de chariots élévateurs, de voiturettes de golf, de véhicules de transport d'entrepôts de marchandises ou de remorqueurs d'aviation, ou comme source de stockage d'énergie stationnaire.
